# EUROPEAN PATENT APPLICATION

(11) **EP 3 415 733 A1**
(43) Date of publication of application: **19.12.2018**
(21) Application number: 17305723.3
(22) Date of filing: 14.06.2017
(51) Int. Cl.: F01N 13/00, F01N 3/20

(54) **FLUID QUALITY SENSOR FOR MEASURING THE QUALITY OF A FLUID, SENSOR ASSEMBLY AND ASSEMBLY FOR COMBUSTION ENGINES COMPRISING A FLUID QUALITY SENSOR**

(71) Applicant: MEAS France, 31027 Toulouse Cedex 3 (FR); Wema System AS, 5258 Blomsterdalen (NO); Measurement Specialties, Inc., Hampton, VA 23666 (US)
(72) Inventor: Milpied, Jean, 31300 Toulouse (FR); Wafo, Paul, 31300 Toulouse (FR); Sletten, Marius Norvoll, 5089 Bergen (NO); Pedrick, Michael, Williamsburg, VA Virginia 23188 (US); Castandet, Armand, 31300 Toulouse (FR)
(74) Representative: Grünecker Patent- und Rechtsanwälte PartG mbB

(57) **Abstract**

Shown is a fluid quality sensor (1) for measuring the quality of a fluid (2), in particular an exhaust fluid (21) for a combustion engine (4), such as a fluid (2) comprising urea, wherein the fluid quality sensor (1) comprises a measurement section (3) that is configured to be mounted to an output side (7) of a pump (5) for the fluid (2). Further, a sensor assembly (10), comprises the fluid quality sensor (1) and at least one additional sensor (11, 12). An assembly (100) for combustion engines (4) comprises a fluid quality sensor (1) or a sensor assembly (10) and the pump (5).

## Description

The invention relates to a fluid quality sensor for measuring the quality of a fluid, in particular an exhaust fluid for a combustion engine, such as a fluid comprising urea, like AdBlue.

Further, the invention relates to a sensor assembly comprising a fluid quality sensor.

Moreover, the invention relates to an assembly for combustion engines comprising a fluid quality sensor.

Such fluid quality sensors can for example be used for monitoring the quality of an exhaust fluid, for example a diesel exhaust fluid of vehicles like cars or trucks. This fluid is injected into the exhaust system of diesel combustion engines in order to reduce the amount of pollutants through selective catalytic reduction (SCR).

Previous systems for supplying the fluid comprise a fluid quality sensor located in a tank. A problem associated with this solution is that the tank is usually at an exposed position and subjected to, for example, cold temperatures and freezing. Such a fluid quality sensor thus cannot measure the quality reliably in any conditions of operation of the SCR system.

The object of the invention is to provide a solution that allows a more reliable measurement of the fluid quality.

This object is achieved when the fluid quality sensor comprises a measurement section that is configured to be mounted to an output side of a pump for the fluid.

A sensor assembly and/or an assembly for combustion engines according to the invention comprise at least one fluid quality sensor.

This solution allows locating the fluid quality sensor at an output side of the pump for the fluid. Thus, the fluid quality sensor is better protected against external influences and is hence more reliable. Further, the fluid quality sensor measures the fluid just before it is injected and not a fraction that is located in the tank, which allows knowing exactly what the quality of the injected fluid is.

The inventive solution can be improved by the following further improvements and advantages embodiments, which are advantageous on their own and can be combined arbitrarily as desired.

If a pressure-based pump is used, the output side of the pump can be the pressure side that means the side with the higher pressure. Such a pressure can be a high pressure, for example a pressure between 4.5 and 8.5 bar. The inventive solution is, however, not restricted to these specific pressures.

In an advantageous embodiment, the measurement section is adapted to be at least partially located in or adjacent to a fluid cavity of the pump. This allows a compact design.

In another advantageous embodiment, the fluid quality sensor is directed into a fluid cavity of the pump to allow a measurement of the quality in the fluid cavity, thus resulting in a compact design. In other words, the fluid quality sensor can be adapted for measuring inside a fluid cavity of the pump.

The fluid quality sensor can comprise a measurement area in which the quality is measured. The measurement area is thus the volume or area in which the quality of the fluid is measured when it is located in this volume or area. This measurement area can be lobe-like or cylindrical. In other embodiments, the measurement area can be rather spherical or disc-shaped or have other shapes. The fluid quality sensor can be adapted or configured that this measurement area is located at an output side of the pump, in particular in or at the fluid cavity of the pump.

A fluid quality sensor that allows an easy measurement is achieved when the fluid quality sensor comprises an ultrasound source and/or an ultrasound detector.

In order to achieve a particular easy measurement setup, the fluid quality sensor can comprise a reflector structure for an ultrasonic signal. The reflector structure can in particular comprise flat surfaces located at a certain distance from an ultrasound detector. Further, the reflector structure can comprise elements that focus the ultrasonic waves.

The reflector structure can be at least partially located in or protrude into the fluid cavity in order to keep the space requirements at a minimum. In order to save material and space, the reflector structure can also be adapted to form a part of the fluid cavity. It can, for example, form a wall of the fluid cavity making another wall superfluous.

The reflector structure can be fixed to the fluid quality sensor so that the fluid quality sensor can be used in different pumps, in particular without a gauging measurement that would be necessary if different structures are used for reflecting the ultrasonic waves in the different pumps. In particular, the reflector structure can be configured such that a reflecting surface is always fixed at a certain distance away from the ultrasound source and/or an ultrasound detector.

In another embodiment, the reflector structure, in particular the reflector or reflective surface, can be located on a part of the pump. Such a design is advantageous as the fluid quality sensor is smaller.

The fluid quality sensor can be configured to be mounted inside the pump at least partially, preferably completely, to allow a compact design. It can comprise sections that cooperate with complimentary sections in the pump. In an assembly, the fluid quality sensor can be located inside the pump, at least partially, preferably completely.

In an alternative embodiment, the quality sensor can be configured to be mounted outside the pump. In the corresponding assembly, the fluid quality sensor is located outside of the pump. It can in particular be located between the pump and the exhaust system into which the fluid is to be injected.

In addition to the fluid quality sensor, the sensor assembly can comprise at least one additional sensor to allow different measurements to take place simultaneously at the same location.

Advantageously, the sensor assembly additionally comprises a temperature sensor and/or a pressure sensor. These values are parameters which can be used in addition to the quality value in order to control a performance of an engine or the pump. Due to the fact that all these parameters are measured at the same time and at the same place, a reliable combination of data for controlling the engine of the pump can be provided. In particular, the pressure at an output side of a pump in combination with the quality, is valuable information for operating the engine.

In an advantageous embodiment, the sensor assembly comprises a common output for all the sensors of the sensor assembly. Thus, only a single cable is necessary for transmitting the information, for example to an ECU (engine control unit) for processing.

For a simplified design, the sensor assembly can comprise a common housing for all the sensors of the sensor assembly.

In order to minimize the number of electric components, the sensors in the sensor assembly can have a common supply such as a common voltage supply or a common power supply.

In an advantageous embodiment, the fluid quality sensor or the sensor assembly comprises electrical and/or electronic parts for controlling the sensor elements. Such a sensor or a sensor assembly can make the use of such control electronics in a further central unit like an ECU unnecessary.

In another advantageous embodiment, the fluid quality sensor or the sensor assembly comprises electrical and/or electronic parts for analyzing and/or processing the signals of the sensor elements. Such a sensor or sensor assembly can thus supply raw or processed data to further elements like an ECU.

In order to allow a compact design, the measurement section of the fluid quality sensor and/or at least one additional sensor is at least partially located in the fluid cavity of the pump.

To achieve a good quality of the ultrasound signal, a transmission element can be located between the fluid quality sensor and the fluid cavity. Such a transmission element can, for example, be disk-like. The transmission element can also be adapted to seal a cavity of the fluid pump, thus providing a double function.

A protection element can be located between the fluid quality sensor and the fluid cavity to protect the fluid quality sensor from damage by a harmful fluid. The protection element can at the same time be a transmission element.

The assembly for combustion engines can comprise further elements like tubes, pipes, lines, a tank, valves and nozzles.

In the following, the inventive solutions will be explained in more detail and with reference to the drawings. The features shown in the further development and advantageous embodiments can be combined as desired and are advantageous on their own.

In the figures:
- Fig. 1: shows a schematic drawing of an assembly comprising a fluid quality sensor;
- Fig. 2: shows a schematic cross-sectional view of a fluid quality sensor attached to a pump;
- Fig. 3: shows the fluid quality sensor of fig. 2 in a schematic perspective exploded view;
- Fig. 4: shows the assembled fluid quality sensor of figs. 2 and 3 in a perspective view.

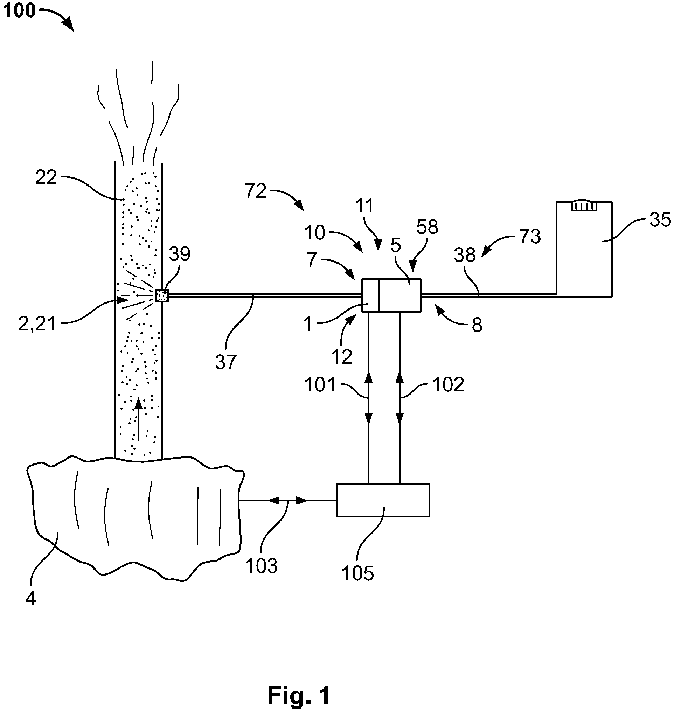

In Fig. 1, the general setup for using the fluid quality sensor 1 is shown.

The fluid quality sensor 1 is part of an assembly 100 for a combustion engine 4 which produces exhaust gases that exit through an exhaust system 22. In order to reduce the pollutants in the gas stream, a fluid 2, in particular an exhaust fluid 21, such as aqueous urea solution known as AdBlue, is injected into the exhaust system 22 with a nozzle 39.

The assembly 100 comprises a tank 35 for the exhaust fluid 21 to which an input line 38 is attached that can supply the fluid 2 at an input side 8 to a pump 5. The pump 5, which for example can be a pressure pump 58, supplies the fluid 2 via an output line 37 attached at an output side 7 to the nozzle 39.

It the output side 7, the fluid quality sensor 1 is attached to the pump 5 to check the quality of the fluid 2.

The fluid quality sensor 1 is connected to an ECU 105 with a cable 101. Based on the data provided by the fluid quality sensor 1, the ECU 105 can control the engine 4 or the pump 5 which are connected to the ECU 105 with cables 102, 103.

The fact that the fluid quality sensor 1 is attached at an output side 7 is advantageous as exactly the fraction of the fluid 2 that is to be injected into the exhaust system 22 is measured. In previous systems, only the fraction of the fluid 2 in the tank 35 was measured, which however is not identical to the fraction of the fluid 2 that is to be injected.

The fluid quality sensor 1 can be part of a sensor assembly 10. The sensor assembly 10 can in particular comprise further sensors like a temperature sensor 11 and a pressure sensor 12 for measuring the pressure and the temperature at the output side 7. These data can also be supplied to the ECU 105 for controlling the engine 4 or the pump 5 depending on the values of the parameters.

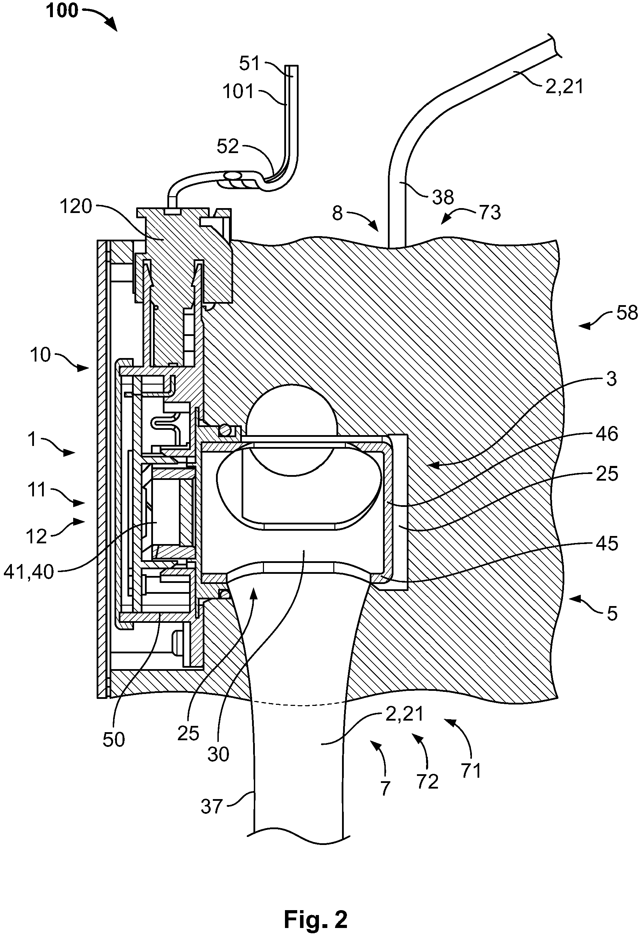

In Figs. 2, 3 and 4, the details of the fluid quality sensor 1 and a sensor assembly 10 comprising the fluid quality sensor 1 is shown.

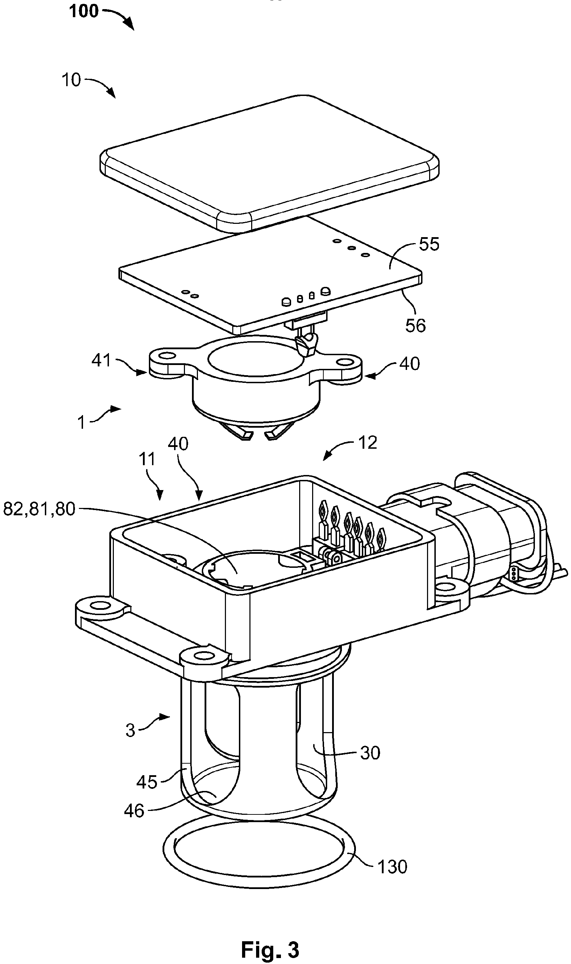

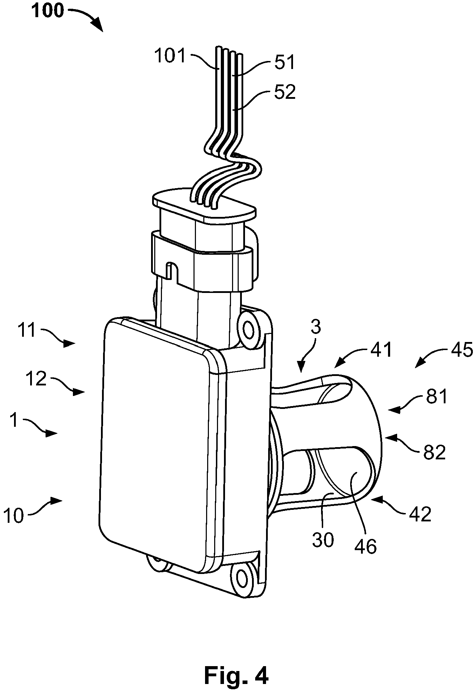

In Fig. 2, a cross-sectional view of a fluid quality sensor 1 attached to the pump 5 is shown. In Figs. 3 and 4, the sensor assembly 10 is shown without the pump 5.

The pump 5 is only shown schematically in Fig. 2. The pump 5 has an input side 8 where an input line 38 supplying the fluid 2 is attached. This side is the low pressure side 73. The pump 5 is a pressure pump 58.

The pump 5, 58 creates a pressure for pumping the fluid 2 from the input side 8 to the output side 7 to which an output line 37 is attached.

The pump comprises a fluid cavity 25 at the output side 7.

The measurement section 3 of the fluid quality sensor 1 is configured to be mounted to the output side 7 of the pump 5. In the embodiment shown in Fig. 2, the measurement section 3 is actually located at the output side 7. The measurement section 3 is at least partially located in a fluid cavity 8 of the pump 5. A measurement area 30, at which the quality of the fluid 2 is measured, is located in the fluid cavity 25 which in this case is a high pressure fluid cavity in which 4.5 to 8.5 bar are present.

In this case, an ultrasonic sensor is used for checking the quality. The fluid quality sensor 1 thus comprises an ultrasound source 40 and an ultrasound detector 41, which emit and absorb ultrasonic waves for measuring the quality. To achieve a reflection of the ultrasonic waves, the fluid quality sensor 1 comprises a reflector structure 45 with a reflector surface 46 located at an inside of an end of the reflector structure 45.

The reflector structure 45 is fixed to the fluid quality sensor 1, in particular, a housing 50 of the sensor assembly 10. Thus, the reflector surface 46 has a predefined distance from the ultrasound source 40 and the ultrasound detector 41. The fluid quality sensor 1 can thus be used in several different pumps without the need for an initial gauging measurement.

The reflector structure 45 has the shape of a cage with several openings allowing sufficient stream of the fluid 2 through it.

The sensor assembly 10 comprises further sensors, in particular a pressure sensor 12 and a temperature sensor 11 for measuring the pressure and the temperature at the output side 7 and in the fluid cavity 25.

The sensor assembly 10 has a common housing 50 to achieve a compact design.

Further, the sensor assembly 10 is a common output 51 in the common supply 52 for all the sensors 1, 11, 12. The data or signals output by the sensor assembly 10 are supplied to the ECU 105 with the cable 101.

The sensor assembly 10 further comprises electric parts 55 for controlling the sensor assembly 10, in particular the fluid quality sensor 1.

Further, the sensor assembly 10 also comprises electric parts 56 for analyzing or converting the measurement data.

The fluid quality sensor 1 also comprises a disc-like transmission element 81 for transmitting the ultrasound waves. The transition element 80 also serves as a protection element 82 protecting the sensor assembly 10 from the harmful fluid 2 which could otherwise damage parts of the fluid quality sensor 1.

### REFERENCE NUMERALS

- 1: fluid quality sensor
- 2: fluid
- 3: measurement section
- 4: combustion engine
- 5: pump
- 7: output side
- 8: input side
- 10: sensor assembly
- 11: temperature sensor
- 12: pressure sensor
- 21: exhaust fluid
- 22: exhaust system
- 25: fluid cavity
- 30: measurement area
- 35: tank
- 37: output line
- 38: input line
- 39: nozzle
- 40: ultrasound source
- 41: ultrasound detector
- 45: reflector structure
- 50: housing
- 51: output
- 52: supply
- 55: electric parts for controlling
- 56: electronic parts for analyzing
- 57: cable
- 58: pressure pump
- 71: pressure side
- 72: high pressure side
- 73: low pressure side
- 80: transmission element
- 81: disk-like transmission element
- 82: protection element
- 100: assembly
- 101: cable
- 102: cable
- 103: cable
- 105: ECU
- 120: plug
- 130: seal

## Claims

1. Fluid quality sensor (1) for measuring the quality of a fluid (2), in particular an exhaust fluid (21) for a combustion engine (4), such as a fluid (2) comprising urea, wherein the fluid quality sensor (1) comprises a measurement section (3) that is configured to be mounted to an output side (7) of a pump (5) for the fluid (2).

2. Fluid quality sensor (1) according to claim 1, wherein the measurement section (3) is adapted to be at least partially located in or adjacent to a fluid cavity (25) of the pump (5).

3. Fluid quality sensor (1) according to one of claims 1 or 2, wherein the fluid quality sensor (1) comprises an ultrasound source (40) and/or an ultrasound detector (41).

4. Fluid quality sensor (1) according to one of claims 1 to 3, wherein the fluid quality sensor (1) comprises a reflector structure (45) for an ultrasonic signal.

5. Fluid quality sensor (1) according to one of claims 1 to 4, wherein the fluid quality sensor is configured to be mounted inside the pump (5).

6. Sensor assembly (10), the sensor assembly (10) comprising the fluid quality sensor (1) according to one of claims 1 to 5 and at least one additional sensor (11, 12).

7. Sensor assembly (10) according to claim 6, wherein the sensor assembly (10) comprises a temperature sensor (11) and/or a pressure sensor (12).

8. Sensor assembly (10) according to one of claims 6 or 7, wherein the sensor assembly (10) comprises a common housing (50) for all the sensors (1, 11, 12) and/or a common output (51) for all the sensors (1, 11, 12)

9. Sensor assembly (10) according to one of claims 5 to 8, wherein the sensor assembly (10) comprises electrical and/or electronic parts (55) for controlling the sensors (1, 11, 12).

10. Sensor assembly (10) according to one of claims 5 to 9, wherein the sensor assembly (10) comprises electrical and/or electronic parts (56) for analyzing and/or processing the signals of the sensors (1, 11, 12).

11. Assembly (100) for combustion engines (4), comprising a fluid quality sensor (1) according to any one of claims 1 to 4 or a sensor assembly (10) according to one of claims 5 to 10, the assembly (100) further comprising the pump (5).

12. Assembly (100) according to claim 11, wherein the pump (5) is a pressure pump (58) and the fluid quality sensor (1) is attached at the high pressure side (72) of the pump (5).

13. Assembly (100) according to one of claims 11 or 12, wherein the measurement section (3) of the fluid quality sensor (1) and/or at least one additional sensor (11, 12) is at least partially located in the fluid cavity (25).

14. Assembly (100) according to one of claims 11 to 13, wherein a transmission element (80) is located between the fluid quality sensor (1) and the fluid cavity (25).

15. Assembly (100) according to one of claims 11 to 14, wherein the fluid quality sensor (1) is located outside the pump (5).
